# FASCICULE DE BREVET EUROPEEN

(11) **EP 1 250 526 B1**
(45) Date de publication et mention de la délivrance du brevet: **08.06.2005**
(21) Numéro de dépôt: 00988958.5
(22) Date de dépôt: 19.12.2000
(51) Int. Cl.: F02K 9/44

(54) **ELECTROPOMPE A ACTIONNEUR A RELUCTANCE VARIABLE HAUTE FREQUENCE**
ELEKTROPUMPE MIT EINEM HOCHFREQUENZ RELUKTANZANTRIEB
ELECTRICALLY-DRIVEN FEED PUMP WITH HIGH FREQUENCY VARIABLE RELUCTANCE ACTUATOR

(30) Priorité: 21.12.1999 FR 9916149
(43) Date de publication de la demande: 23.10.2002
(60) Demande divisionnaire: 05075714.5
(73) Titulaire: CENTRE NATIONAL D'ETUDES SPATIALES, F-75001 Paris (FR)
(72) Inventeur: GIBEK, Isabelle, F-31240 l'Union (FR); VANNIER, Jean-Claude, F-92240 Malakoff (FR); DUGUE, François, F-31450 Pompertuzat (FR)
(74) Mandataire: Lassiaille, Christian Michel
(86) Numéro de dépôt international: PCT/FR2000/003585
(87) Numéro de publication internationale: WO 2001/046581

(56) Documents cités:
- US-A- 3 088 406
- US-A- 3 769 879
- US-A- 4 696 160

## Description

L'invention concerne un système et un procédé d'alimentation en ergol liquide d'au moins un propulseur -notamment les propulseurs de contrôle d'attitude ou de manoeuvre- d'un engin aérien ou spatial tel qu'un satellite artificiel.

Les propulseurs de contrôle d'attitude ou de manoeuvre d'un engin aérien ou spatial doivent pouvoir être alimentés de façon intermittente, à partir d'un réservoir d'ergol -notamment un monergol tel que l'hydrazine-pressurisé par un gaz neutre tel que l'azote sous une pression initiale qui est typiquement de l'ordre de 2MPa à 2,5MPa. Cette alimentation par réservoir sous pression permet d'alimenter les propulseurs rapidement et à la demande, à tout moment. Au fur et à mesure du vol, le réservoir s'épuise en ergol et la pression de sortie fournie aux propulseurs diminue donc jusqu'à une pression minimum, de l'ordre de 0,55MPa, pour laquelle on considère que le réservoir est vide.

Cette chute de pression nuit au rendement des propulseurs, qui est en effet optimum pour une pression d'admission prédéterminée, mais ne peut être constant sur une plage aussi étendue de pression. Cette variation de rendement et de performances des propulseurs au cours du vol pose plusieurs problèmes. En premier lieu, elle nécessite de prévoir une quantité d'ergol plus importante que celle qui serait nécessaire, à énergie fournie égale. De surcroît, le fait d'utiliser un réservoir pressurisé alimentant directement les propulseurs imposant une pression minimale en fin de vie de valeur relativement importante (0,55MPa), se traduit par un réservoir de volume et de masse importants. En outre, elle rend plus difficile le contrôle automatique de l'engin puisque les signaux de commande des propulseurs -notamment leur durée d'allumage- pour obtenir un effet donné, varient selon leur rendement. En outre, les performances des propulseurs se dégradent au cours du vol, et la durée des manoeuvres de l'engin s'allonge et la consommation en ergol pour chaque manoeuvre peut augmenter. En outre, les propulseurs s'usent plus rapidement en fonctionnant à basse pression.

Pour pallier ces inconvénients, dans certains engins spatiaux dans lesquels les propulseurs doivent présenter des performances au moins sensiblement constantes pendant une durée donnée, on embarque des réservoirs complémentaires de gaz neutre pressurisé à haute pression permettant de rétablir la pression dans le réservoir d'ergol pressurisé au fur et à mesure de la consommation. Cette solution est envisageable pour les engins spatiaux de grandes dimensions (satellites géostationnaires, sondes spatiales planétaires ou autres). Elle ne peut néanmoins pas être envisagée dans le cas d'engins de petites tailles, dans lesquels la surcharge due aux réservoirs complémentaires de gaz neutre serait rédhibitoire.

Dans tous les cas, il est reconnu que le fait d'adopter un réservoir d'ergol pressurisé alimentant directement les propulseurs nécessite de surdimensionner l'ensemble du système de propulsion.

A l'inverse, les propulseurs à fonctionnement unique et continu, tels que les propulseurs des lanceurs spatiaux, sont alimentés par l'intermédiaire d'une turbopompe entraînée par les gaz brûlés, et qui fournit une pression constante d'ergol aux propulseurs. Une telle solution n'est pas adaptée dans le cas de propulseurs à fonctionnement intermittent devant être alimentés rapidement à la demande, compte tenu notamment de la durée prohibitive de lancement et d'arrêt de la turbopompe, et des valeurs de débit et pression requises. En outre, elle entraîne un poids, une complexité et un coût inutiles comparativement à la seule surcharge d'ergol nécessaire pour compenser la baisse de rendement d'un système à réservoir pressurisé.

Par ailleurs, il est considéré que les deux solutions connues consistant à utiliser soit un système à réservoir pressurisé alimentant directement les propulseurs, soit un système à pompe d'alimentation, s'excluent mutuellement dans la mesure où le réservoir pressurisé induit en lui-même une surcharge de masse inerte relativement importante et supprime l'intérêt d'utiliser une pompe (puisqu'il suffit d'embarquer une quantité suffisante d'ergol), et, à l'inverse, l'usage d'une pompe rend inutile l'emploi d'un réservoir pressurisé puisque l'ergol peut être pompé d'un réservoir basse pression présentant une masse inerte beaucoup plus faible.

Ainsi, US-5026259 décrit un système miniaturisé de pressurisation permettant de stocker un monergol à basse pression (0,35MPa à 1MPa) et de le fournir à haute pression aux propulseurs grâce à une pompe différentielle à piston alternatif alimentée par un générateur de gaz chaud transformant le monergol en gaz chaud motorisant la pompe. La pressurisation est obtenue par une boucle fermée instable associée à un limiteur de pression. Un accumulateur de grande dimension est prévu en parallèle aux propulseurs à la sortie de la pompe pour lisser les variations de pression fournies par la pompe. Cette solution a aussi pour inconvénient d'utiliser une partie de l'ergol pour la pressurisation et donc de nuire au rendement global de la propulsion tout en augmentant la masse due aux pièces mécaniques de la propulsion (pompe, manifold, générateur de gaz...), d'autant que la fourniture d'un débit au moins sensiblement continu de monergol à haute pression nécessite de doubler le système de pressurisation. Par ailleurs, la quantité d'ergol nécessaire à la pressurisation est d'autant plus importante que la pression dans le réservoir diminue au cours du vol, et les performances du générateur de gaz chaud, dont le fonctionnement est lié à la réaction chimique de dégradation du monergol, sont difficiles à maîtriser. Ainsi, il est difficile de déterminer avec précision la quantité de monergol à embarquer en fonction de la durée de vol requise et des variations d'utilisation des propulseurs. Avec une telle solution le contrôle automatique de l'engin spatial est relativement complexe.

De même, US-4.696.160 décrit un système d'alimentation d'un propulseur en ergols liquides comprenant des réservoirs d'ergols à basse pression et des pompes actionnées par solénoïdes fournissant les ergols au propulseur via des vannes d'injection actionnées par la pression. L'électropompe à solénoïde décrite dans ce document n'est pas compatible avec les contraintes de poids, d'encombrement et de puissance requises à bord d'un engin aérien ou spatial et n'est pas adaptée au pompage d'un monergol tel que l'hydrazine. En particulier, une telle électropompe nécessite un solénoïde de grandes dimensions, de poids important, et à forte consommation électrique pour une pression de sortie donnée. En pratique, une telle électropompe à solénoïde ne peut pas être réellement utilisée pour l'alimentation en ergol à une pression de l'ordre de 2 MPa à 2,5 MPa d'un propulseur d'engin aérien ou spatial tel qu'un microsatellite -notamment un microsatellite de communication-. En outre, la montée en pression à chaque démarrage de la pompe décrite dans ce document est trop lente pour assurer un fonctionnement correct du propulseur, notamment dans le cas d'un propulseur de contrôle d'attitude.

L'invention vise donc à pallier ces inconvénients.

L'invention vise à proposer une électropompe susceptible d'être utilisée dans un système et/ou un procédé d'alimentation en ergol liquide.

L'invention vise en particulier à proposer une électropompe apte à maintenir une pression au moins sensiblement constante élevée -notamment de l'ordre de 2MPa à 2,5MPa-, de liquide dans un réservoir secondaire duquel le liquide est prélevé, à la demande, cette électropompe étant alimentée en liquide à partir d'un réservoir principal pressurisé sous une pression pouvant varier au cours du temps d'une pression élevée -notamment de l'ordre de 2 à 2,5MPa- jusqu'à une pression faible -notamment de l'ordre de 0,1MPa-.

L'invention vise en particulier à proposer une électropompe apte à fournir une pression de valeur moyenne au moins sensiblement constante élevée avec un débit relativement faible -notamment de l'ordre de 1 à 10 cm3/s-.

L'invention vise aussi à proposer une électropompe présentant un faible temps de montée en pression et en débit, notamment de l'ordre de ou inférieur à la seconde.

L'invention vise plus particulièrement à proposer une électropompe adaptée pour le pompage d'ergol -notamment un monergol tel que l'hydrazine- pour l'alimentation d'au moins un propulseur - notamment de tous les propulseurs- d'un engin aérien ou spatial.

L'invention vise aussi à proposer une électropompe qui soit compatible avec les contraintes de coût, poids, encombrement, durée de vie, fiabilité, et résistance d'une intégration à bord d'un engin aérien ou spatial.

L'invention vise plus particulièrement à proposer une électropompe adaptée à l'alimentation en ergol de propulseurs -notamment des propulseurs de contrôle d'attitude ou de manoeuvre- d'un engin aérien ou spatial tel qu'un satellite artificiel.

Pour ce faire, l'invention concerne une électropompe volumétrique à déplacement positif linéaire comprenant :
- au moins un piston guidé en translation dans un bloc cylindre,
- une chambre d'admission/refoulement de liquide dotée de clapets anti-retour d'admission/refoulement et adaptée pour recevoir des variations de pression induites par les déplacements du piston,
- des moyens moteurs électromagnétiques adaptés pour entraîner le piston en translations alternatives dans le bloc cylindre, le déplacement du piston dans un sens correspondant à des phases d'admission du liquide dans la chambre d'admission/refoulement, tandis que le déplacement du piston dans l'autre sens correspond à des phases de refoulement de liquide hors de la chambre d'admission/refoulement,
caractérisée en ce que les moyens moteurs électromagnétiques comprennent :
- au moins un actionneur électromagnétique à réluctance variable unidirectionnel à course linéaire, comprenant une armature mobile associée au piston pour l'entraîner en translation dans le sens correspondant aux phases du refoulement du liquide,
- des moyens électroniques d'alimentation électrique et de commande de l'actionneur adaptés pour en piloter le fonctionnement à une fréquence de fonctionnement supérieure à 100 Hz. Avantageusement et selon l'invention, les moyens électroniques d'alimentation électrique et de commande de l'actionneur sont adaptés pour en piloter le fonctionnement à une fréquence de fonctionnement comprise entre 100 Hz et 300 Hz -notamment entre 150 Hz et 250 Hz-.

Il est à noter qu'un actionneur électromagnétique à réluctance variable à course linéaire (de type électro-aimant) n'est pas un dispositif moteur électrodynamique à entrefer constant tel qu'un actionneur à solénoïde formé d'un simple bobinage alimenté en courant alternatif ou pulsatoire et n'en possède pas les propriétés. En outre, dans l'électropompe selon l'invention, l'actionneur électromagnétique à réluctance variable est piloté à haute fréquence et n'est pas utilisé en tout ou rien à basse fréquence comme dans les applications traditionnelles de ces actionneurs (électro-aimants de levage, relais...).

Néanmoins, on constate en pratique que le choix d'un tel actionneur, bien que de commande électrique plus complexe, permet de réaliser une électropompe compacte fournissant une pression élevée pouvant être de valeur moyenne au moins sensiblement constante mais ajustable à volonté, malgré des variations de la pression d'admission dans une large plage. Le fait de faire fonctionner l'actionneur à haute fréquence, supérieure à 100 Hz, -notamment entre 100 Hz et 300 Hz, de préférence entre 150 Hz et 250 Hz- permet notamment de diminuer le diamètre du piston, et la masse et l'encombrement de l'électropompe, tout en délivrant une pression de refoulement relativement élevée.

Avantageusement, une électropompe selon l'invention est caractérisée en ce que l'actionneur électromagnétique comprend une armature fixe associée à au moins un bobinage d'aimantation, et une armature mobile guidée en translations alternatives par rapport à l'armature fixe avec laquelle elle définit un circuit magnétique avec un entrefer dont la dimension varie au cours des mouvements de translation de l'armature mobile, l'armature mobile étant reliée mécaniquement au piston de façon à l'entraîner en translation dans le sens correspondant aux phases de refoulement du liquide lors de la fermeture de l'entrefer induite par la circulation d'un courant électrique dans le bobinage, et à être rappelée en translation avec le piston dans le sens correspondant aux phases d'admission du liquide lors de l'ouverture de l'entrefer, et en ce que lesdits moyens électroniques sont adaptés pour fournir au bobinage un courant électrique impulsionnel apte à entraîner, selon la fréquence de fonctionnement, l'armature mobile, qui est active, dans les phases de refoulement, et à ne pas entraîner l'armature mobile, qui est inactive, dans les phases d'admission lors desquelles le piston et l'armature mobile sont rappelés par la pression du liquide à l'admission et/ou par des moyens de rappel élastique.

Avantageusement et selon l'invention, lesdits moyens électroniques sont adaptés pour délivrer un profil de courant d'alimentation adapté pour empêcher le contact de l'armature mobile avec l'armature fixe en fin des phases de refoulement. On évite ainsi les chocs nuisibles au fonctionnement continu et à la longévité de la pompe. Pour ce faire, il suffit d'interrompre le courant d'alimentation du bobinage à chaque impulsion suffisamment tôt.

De même, avantageusement et selon l'invention, l'actionneur électromagnétique comporte une butée amortie de fin de course limitant l'amplitude de déplacement de l'armature mobile en fin des phases d'admission, et lesdits moyens électroniques sont adaptés pour délivrer un profil de courant d'alimentation adapté pour empêcher le contact de l'armature mobile avec la butée en fin des phases d'admission. Il suffit pour ce faire, avant de délivrer chaque impulsion de commande dans le sens du refoulement, d'établir un courant d'alimentation d'une valeur suffisante pour freiner la course de l'armature mobile avant la fin de la phase d'admission, mais limitée pour permettre à l'armature mobile de terminer sa course en phase d'admission.

La pression d'admission, variable, concourt au rappel du piston et de l'armature mobile en phase d'admission. En conséquence, le profil du courant d'alimentation de la bobine est adapté en fonction de cette pression d'admission tant qu'elle reste supérieure à une valeur prédéterminée - notamment de l'ordre de 0,3MPa -.

Avantageusement et selon l'invention, l'électropompe comprend des moyens de rappel élastique du piston et de l'armature mobile de l'actionneur électromagnétique, dans le sens correspondant aux phases d'admission du liquide.

Avantageusement et selon l'invention, les moyens de rappel élastique sont adaptés pour être actifs et fournir un effort de rappel lorsque la pression d'admission devient inférieure à une valeur, dite pression seuil prédéterminée. Cette pression seuil est de préférence supérieure à Pmin - notamment de l'ordre de 0,3MPa alors que Pmin est de l'ordre de 0,1MPa -. L'effort de rappel exercé par les moyens de rappel est supérieure ou égal à celui imparti par la pression seuil.

On assure ainsi pour les valeurs de pression d'admission inférieures à ladite pression seuil un rappel du piston et de l'armature mobile selon des caractéristiques au moins sensiblement constantes sur toute la plage des variations de la pression d'admission, de sorte que les modifications du profil du courant d'alimentation en fonction des variations de la pression d'admission peuvent être limitées, voire inutiles. Avantageusement et selon l'invention, ces moyens de rappel élastique peuvent être formés d'un simple ressort de compression agissant sur le piston ou sur le noyau de l'armature mobile, et adapté pour être comprimé au moins en fin de phase de refoulement et se détendre au moins en début de phase d'admission.

En outre, avantageusement et selon l'invention, lesdits moyens électroniques comportent au moins un capteur de la position absolue de l'armature mobile et/ou du piston. Avantageusement et selon l'invention, lesdits moyens électriques comportent des moyens d'asservissement en boucle fermée sur la position de l'armature mobile et/ou du piston aptes à adapter le profil du courant électrique d'alimentation de l'actionneur électromagnétique pour obtenir les valeurs de la pression de refoulement nominale et/ou du débit nominal à fournir en fonction de la valeur d'au moins un paramètre variable -notamment de la pression d'admission-. Ces moyens d'asservissement sont adaptés en particulier pour maintenir la valeur du débit fourni lorsque la pression d'admission baisse. Pour ce faire, ils modifient le profil du courant d'alimentation pour modifier la course du piston, en l'augmentant lorsque la pression d'admission baisse.

Par ailleurs, la chambre d'admission/refoulement peut recevoir l'extrémité active du piston se déplaçant alternativement, dans les applications où le liquide pompé est compatible avec une étanchéité dynamique radiale formée entre le piston et le bloc cylindre. En variante, avantageusement et selon l'invention, notamment lorsque le liquide pompé est un liquide instable tel qu'un monergol -notamment l'hydrazine-, l'électropompe comprend des moyens d'étanchéité dynamique entre le piston et le bloc cylindre, et une chambre de pompage dans laquelle débouche une extrémité active du piston, cette chambre de pompage étant remplie d'un liquide neutre -notamment de l'huile-, et séparée de façon étanche de la chambre d'admission/refoulement par une membrane flexible apte à transmettre entre ces deux chambres les variations de pression à la fréquence de fonctionnement, de sorte que le liquide pompé ne vient pas au contact des moyens d'étanchéité dynamique interposés entre le piston et le bloc cylindre. Avantageusement et selon l'invention, la membrane est métallique. Il est à noter en outre que le piston n'est pas directement et mécaniquement relié à la membrane, autorisant ainsi un fonctionnement à haute fréquence et haute pression.

Par ailleurs, les clapets de la chambre d'admission/refoulement doivent être adaptés pour un fonctionnement à haute fréquence. Avantageusement et selon l'invention, chacun des clapets anti-retour comprend une bille rappelée par un ressort contre un siège de clapet, et une butée axiale de limitation de levée de bille de façon à empêcher le déplacement axial de la bille au-delà de sa position dans laquelle elle ne freine plus l'écoulement traversant le siège du clapet. Avantageusement et selon l'invention, chacun des clapets anti-retour comprend une bille en nitrure de silicium dont le diamètre est de l'ordre de 3mm.

En outre, avantageusement et selon l'invention, le piston présente un diamètre de 5mm à 10mm -notamment de l'ordre de 6mm- pour une course axiale comprise entre 0,5mm et 5mm -notamment de l'ordre de 1mm-.

Il est à noter que le fonctionnement à haute fréquence permet, à performances égales, de réduire le diamètre et la course du piston, donc l'encombrement, le poids et le coût de l'actionneur. Il permet aussi de réduire la taille du réservoir secondaire, ainsi que les amplitudes des variations instantanées du débit fourni.

L'invention concerne aussi une électropompe caractérisée en combinaison par tout ou partie des caractéristiques mentionnées ci-dessus ou ci-après.

D'autres buts, caractéristiques et avantages de l'invention apparaîtront à la lecture de la description suivante qui se réfère aux figures annexées illustrant à titre d'exemples non limitatifs des modes de réalisation de l'invention, et dans lesquelles :
- la figure 1 est un schéma d'un système d'alimentation selon l'invention,
- la figure 2 est un organigramme d'un procédé d'alimentation selon l'invention,
- la figure 3 est une coupe axiale schématique d'une électropompe selon l'invention, par un plan diamétral, à l'exception de la tête d'admission/refoulement illustrée en coupe selon deux plans radiaux passant respectivement par l'axe d'un clapet d'admission et l'axe d'un clapet de refoulement, et le support du capteur de position étant illustré en coupe par un plan diamétral différent de celui du corps dé l'électropompe,

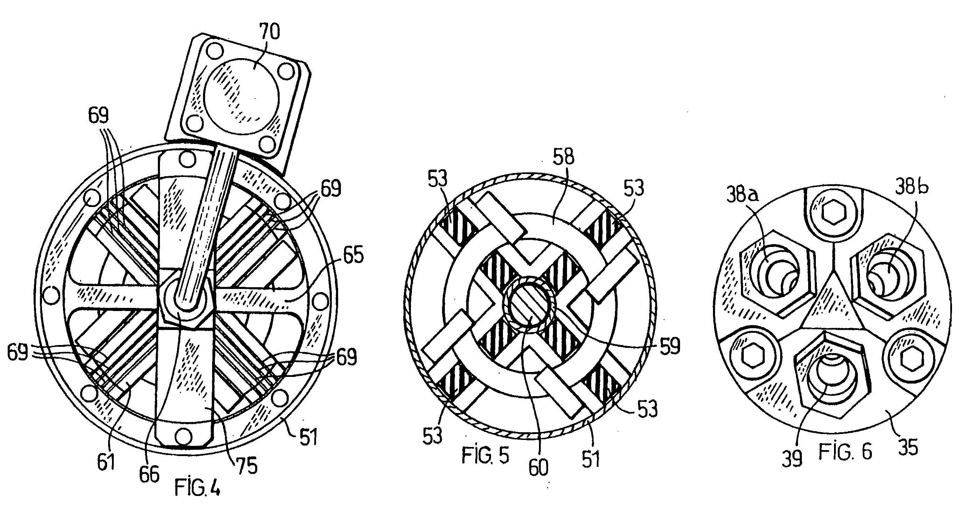

- la figure 4 est une vue axiale schématique de dessous selon la ligne IV-IV de la figure 3,
- la figure 5 est une coupe schématique selon la ligne V-V de la figure 3,
- la figure 6 est une vue axiale schématique de dessus selon la ligne VI-VI de la figure 3,
- la figure 7 est un schéma général des moyens électroniques d'alimentation électrique et de commande d'une électropompe selon l'invention,
- la figure 8 est un schéma électronique de la carte de puissance des moyens électroniques d'une électropompe selon l'invention,
- la figure 9 est un schéma électronique d'une carte de commande des moyens électroniques d'une électropompe selon l'invention,
- la figure 10 est un diagramme illustrant des chronogrammes des signaux de la carte de commande de la figure 9,

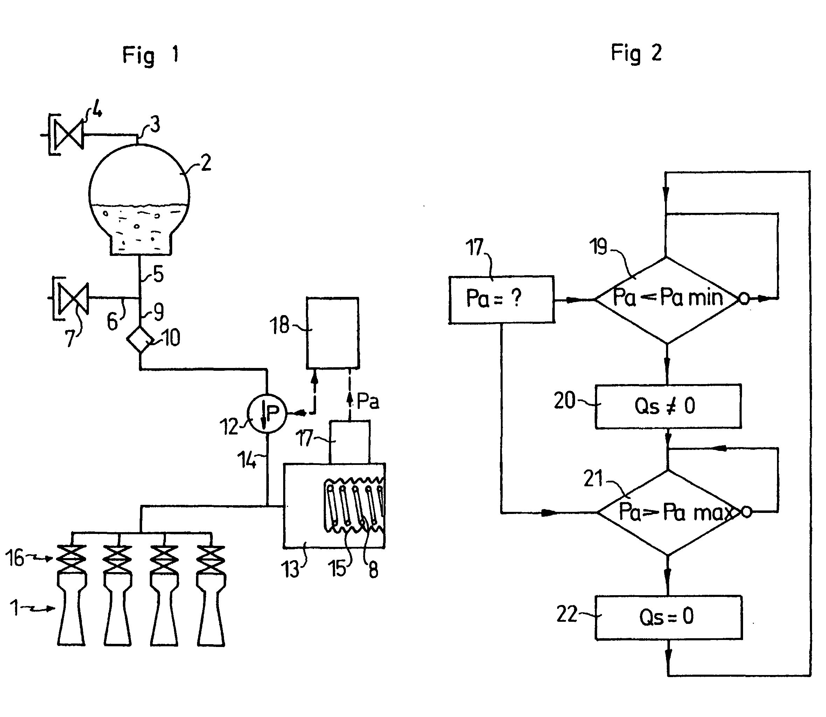

La figure 1 représente un système d'alimentation selon l'invention en monergol liquide des propulseurs 1 d'un engin aérien ou spatial tel qu'un satellite artificiel -notamment un microsatellite ou un minisatellite-. Ce système comprend un réservoir principal 2 contenant une réserve de monergol liquide -notamment de l'hydrazine- pressurisé à une pression Pr, dont la valeur initiale est Po par un gaz neutre tel que de l'azote alimenté sous pression dans le réservoir 2. Le réservoir 2 principal est globalement sphérique et comprend une entrée 3 de pressurisation dotée d'une vanne de pressurisation 4 et un orifice 5 d'entrée sortie d'ergol, diamétralement opposée à l'entrée 3 de pressurisation. Sur cet orifice 5 est connectée une conduite 6 dotée d'une vanne 7 de remplissage et de vidange d'ergol. L'orifice 5 est également relié à une conduite d'alimentation 9 fournissant le liquide issu du réservoir principal 2 à un filtre 10, puis à une électropompe 12 qui délivre un débit de liquide à une pression de refoulement Ps vers un réservoir secondaire 13 et des propulseurs 1.

Ce réservoir secondaire 13 a un volume fixe inférieur à celui du réservoir principal 2. Le volume de ce réservoir secondaire 13 est déterminé notamment en fonction du débit nécessaire aux propulseurs 1 et du temps de réponse au démarrage de l'électropompe 12. Par exemple, le volume du réservoir principal 2 est compris entre 1 ℓ et 100 ℓ, et le volume du réservoir secondaire 13 est compris entre 1cm3 et 10cm3. Le réservoir secondaire 13 est connecté en parallèle à la sortie 14 de l'électropompe 12 et est formé d'une enceinte indéformable close renfermant un soufflet 15 (ou autre organe déformable) rappelé à l'encontre de la pression régnant dans cette enceinte par des moyens 8 de rappel tels qu'un ressort de compression, dans le sens d'une diminution du volume utile du réservoir secondaire 13. En variante, ces moyens 8 de rappel peuvent être formés d'un gaz neutre pressurisé renfermé dans le soufflet 15, comme dans le réservoir principal 2.

Le réservoir secondaire 13 est directement connecté d'une part à la sortie 14 de l'électropompe 12, et, d'autre part, aux vannes de commande 16 individuelles de chacun des propulseurs 1. Un capteur de pression 17 est associé au réservoir secondaire 13 de façon à pouvoir mesurer la pression Pa qui règne au sein du réservoir secondaire 13 et qui correspond à la pression du liquide pouvant être fourni aux propulseurs 1 par ce réservoir secondaire 13.

Le réservoir secondaire 13 forme donc un réservoir tampon de petite capacité entre le réservoir principal 2 et les propulseurs 1, et ce réservoir 13 est maintenu pressurisé à une pression prédéterminée par l'électropompe 12 et les moyens 8 de rappel, au fur et à mesure de la demande en ergol par les propulseurs 1.

Un automatisme de commande 18 permet de commander le fonctionnement de l'électropompe 12. Cet automatisme de commande 18 est adapté pour déclencher le fonctionnement de l'électropompe 12 lorsque la pression Pa mesurée dans le réservoir secondaire 13 devient inférieure à une pression Pamin prédéterminée. L'automatisme 18 est également adapté pour interrompre le fonctionnement de l'électropompe 12 lorsque la pression Pa mesurée dans le réservoir secondaire 13 atteint une valeur Pamax prédéterminée, de sorte que les propulseurs 1 sont alimentés en monergol liquide par le réservoir secondaire 13 et/ou l'électropompe 1 sous une pression qui reste toujours comprise, au cours du vol de l'engin, entre Pamin et Pamax. Les moyens 8 de rappel sont tarés pour que la pression Pa dans le réservoir secondaire 13 puisse prendre une valeur comprise entre Pamin et Pamax lorsque l'électropompe 12 est en fonctionnement.

La figure 2 représente un organigramme simplifié d'un procédé d'alimentation mis en oeuvre dans un tel système, par l'automatisme de commande 18. Lors de l'étape 19 de test, on examine si la pression Pa mesurée par le capteur 17 est ou non inférieure à la pression Pamin, qui correspond à la pression minimale d'alimentation des propulseurs 1. Si tel est le cas, on exécute l'étape 20 d'allumage de l'électropompe 12 qui délivre au réservoir secondaire 13 un débit de liquide Qs non nul sous une pression de refoulement Ps déterminée par les moyens 8 de rappel, comprise entre Pamin et Pamax selon le taux de remplissage du réservoir secondaire 13. On examine ensuite, lors de l'étape 21, si la pression Pa fournie par le capteur 17 est ou non supérieure à une valeur prédéterminée Pamax correspondant à la pression maximum qui doit régner dans le réservoir secondaire 13. Si tel est le cas, on exécute l'étape 22 d'extinction de l'électropompe 12 qui ne fournit plus de liquide (Qs=0). Après cette étape 22 d'extinction, on exécute à nouveau l'étape 19 de test. Si, lors de l'étape 19 de test, on constate que la pression Pa régnant dans le réservoir secondaire 13 n'est pas inférieure à Pamin, on boucle cette étape en permanence. De même, si, lors de l'étape 21, on constate que la pression qui règne Pa dans le réservoir secondaire 13 n'est pas supérieure à Pamax, on boucle cette étape 21 de test en permanence.

Ainsi, quelle que soit la valeur de la pression fournie en sortie 5 du réservoir principal 2 au-dessus d'une pression minimum Pmin de l'ordre de 0,1MPa, (qui peut être aussi faible que la pression limite de début de cavitation de l'électropompe 12) la pression du liquide dans le réservoir secondaire 13 sera toujours comprise entre Pamin et Pamax, de sorte que les propulseurs 1, alimentés à partir du même réservoir secondaire 13 et/ou de l'électropompe 12, recevront le liquide sous une pression de valeur moyenne au moins sensiblement constante (comprise entre Pamin et Pamax) permettant d'optimiser leur rendement et leur fonctionnement.

L'électropompe 12 n'est active que lorsque l'un ou plusieurs des propulseurs 1 requiert ou a requis un débit de liquide. Elle est adaptée pour pouvoir délivrer un débit de liquide suffisant pour l'alimentation de tous les propulseurs 1 connectés directement sur sa sortie 14 et au réservoir secondaire 13. Lorsqu'aucun propulseur 1 n'est actif, sa pression de refoulement Ps est égale, aux pertes de charges près, à la pression Pa qui règne dans le réservoir secondaire 13. Cela reste vrai lorsque les propulseurs 1 sont actifs dans la mesure où le débit Qs est supérieur à la somme des débits d'alimentation de tous les propulseurs.

A partir d'une certaine quantité d'ergol consommé par les propulseurs 1 reliés au réservoir secondaire 13, ce réservoir secondaire 13 s'épuise, puis lorsque la pression atteint la valeur Pamin, l'électropompe 12 démarre et fournit tout le débit nécessaire.

Le réservoir secondaire 13 qui est un réservoir de volume pressurisé par les moyens 8 de rappel, a pour fonction de permettre une connection de l'électropompe 12 volumétrique fournissant un débit constant Qs, aux propulseurs 1 dont la demande en débit est variable selon qu'un (ou plusieurs) propulseur(s) 1 est(sont) actifs).

Le volume du réservoir secondaire 13 détermine la périodicité de déclenchement de l'électropompe 12, en fonction du débit fourni aux propulseurs 1.

Pour assurer que les propulseurs 1 puissent être tous alimentés en permanence le débit Qs fourni par l'électropompe 12 doit être supérieur à la somme des débits d'alimentation des différents propulseurs 1 reliés à l'électropompe 12 et au réservoir secondaire 13. De la sorte, même lorsque tous les propulseurs 1 sont en fonctionnement, l'électropompe 12 aura un fonctionnement intermittent, commandé par l'automatisme de commande 18 selon les variations de la pression Pa au sein du réservoir secondaire 13, entre Pamin et Pamax.

De préférence, le débit Qs fourni par l'électropompe 12 est du même ordre (légèrement supérieur) au débit total d'alimentation de tous les propulseurs 1.

Les valeurs de Pamin et Pamax sont déterminées pour encadrer la pression nominale d'alimentation Pe des propulseurs 1 qui est en générale comprise entre 2 MPa et 2,5 MPa (Pamin ≤ Pe ≤ Pamax). Par exemple, pour une pression nominale d'alimentation Pe de l'ordre de 2,2 Mpa, on choisit Pamin de l'ordre de 2,1 MPa et Pamax de l'ordre de 2,3 MPa. De préférence, la différence Pamax-Pamin représente de l'ordre de 5 % à 10 % la valeur moyenne (Pamax + Pamin)/2, qui est elle-même de l'ordre de Pe.

Un électropompe 12 volumétrique selon l'invention susceptible d'être utilisée dans un système d'alimentation selon l'invention est décrite ci-après.

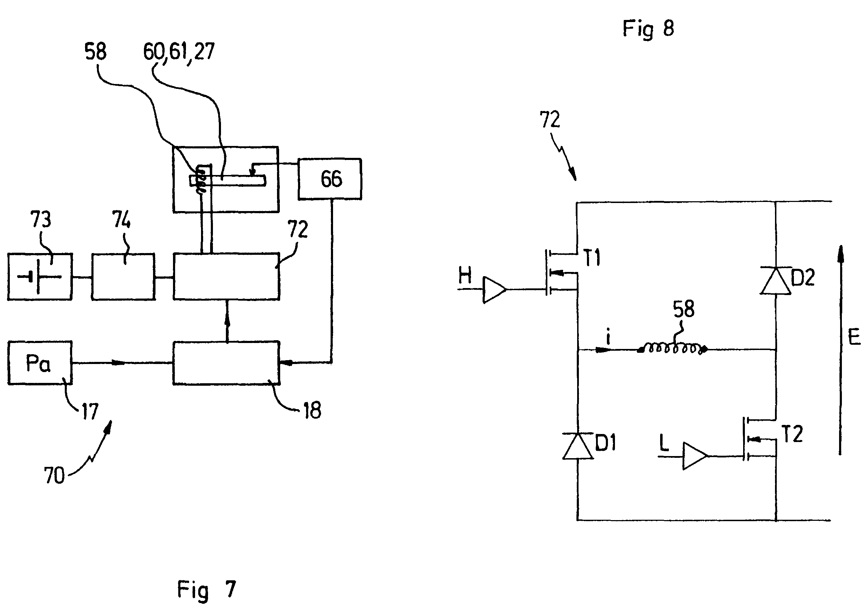

L'électropompe 12 comprend un corps de pompe 25 et un actionneur électromagnétique à réluctance variable 26 montés en prolongement l'un de l'autre. Le corps de pompe 25 comprend un piston 27 guidé en translation dans un bloc cylindre 28 selon un axe 29 de translation. Pour le guidage du piston 27, le bloc cylindre 28 comprend un alésage cylindrique 30 et des moyens d'étanchéité dynamique radiale, par exemple sous forme d'un joint torique inséré dans une gorge périphérique du piston 27, qui assure l'étanchéité entre le piston 27 et l'alésage cylindrique 30 sur toute la course de translation du piston 27. Le piston 27 présente une extrémité libre 31 de pompage et l'alésage cylindrique 30 contenant le piston 27 débouche, du côté de l'extrémité libre 31 du piston 27, dans une chambre de pompage 32 évasée et de forme au moins sensiblement conique ménagée dans le bloc cylindre 28. Cette chambre de pompage 32 est refermée par une membrane flexible métallique 33 soudée à sa périphérie à la paroi correspondante du bloc cylindre 28. Cette paroi est prolongée axialement au-delà de la membrane 33 de façon à former une chambre 34 d'admission/refoulement qui est refermée hermétiquement par une tête 35 d'admission/refoulement incorporant des clapets anti-retour d'admission 36 et de refoulement 37. Comme on le voit figure 6, l'électropompe comprend de préférence deux entrées d'admission 38a, 38b, chacune reliée à un clapet anti-retour d'admission 36, et recevant le liquide en provenance du réservoir principal 2, et une sortie de refoulement 39 reliée à un clapet anti-retour de refoulement 37 délivrant le liquide pressurisé vers le réservoir secondaire 13.

Un liquide neutre incompressible, par exemple de l'huile, remplit la chambre de pompage 32, entre l'extrémité libre 31 du piston 27 et la membrane flexible 33. La membrane flexible 33 transmet donc entre la chambre de pompage 32 et la chambre d'admission/refoulement 34, les variations de pression résultant des translations alternatives du piston 27 dans l'alésage cylindrique 30.

Afin d'isoler entièrement le piston 27 de la pression extérieure qui, dans les applications spatiales, correspond au vide spatial, l'extrémité de l'alésage cylindrique 30 opposée à la chambre de pompage 32 débouche dans une chambre d'isolation 40, de plus grande dimension radiale que l'alésage cylindrique 30, ménagée dans le bloc cylindre 28, et refermée de façon étanche à son extrémité opposée à l'alésage cylindrique 30 par une couronne 41 percée axialement et une douille centrale 42 percée d'un alésage traversant 43. Cet alésage 43 est traversé avec un jeu radial par une tige 44 prolongeant le piston 27. Un soufflet élastique 45 entoure la tige 44 et relie de façon étanche la douille centrale 42 à l'extrémité 46 du piston 27 qui débouche dans la chambre d'isolation 40. Cette extrémité 46 est évasée de façon à présenter des dimensions radiales, ainsi que le soufflet 45, très légèrement supérieures à celle du piston 27. De la sorte, lors des déplacements alternatifs en translation du piston 27, la pression au sein de la chambre d'isolation 40, remplie d'huile, reste au moins sensiblement constante. Cette chambre d'isolation 40 et les joints statiques 75 entre la couronne 41 et la douille 42 et 77 entre la couronne 41 et le bloc cylindre 28 permettent donc d'isoler l'ensemble de l'alésage cylindrique 30 et du piston 27 de la pression externe.

En variante, on peut réaliser cette étanchéité en incorporant l'ensemble de l'actionneur 26 dans un prolongement axial du bloc cylindrique 28, l'ensemble étant refermé de façon hermétique par un couvercle avec un joint d'étanchéité statique. Cette variante permet de fiabiliser l'électropompe 12 (remplacement du soufflet 45 déformable et des joints 76, 77 par un seul joint statique) et d'en réduire l'encombrement et le coût.

Chacun des clapets 36, 37 anti-retour comprend une bille 47 rappelée par un ressort de compression 48 contre un siège de clapet 49. Une butée axiale 50 de limitation de levée de bille empêche le déplacement axial de la bille 47 au-delà de sa position dans laquelle elle ne freine plus l'écoulement de liquide traversant le siège de clapet 49. La bille 47 de chaque clapet 36, 37 est avantageusement en nitrure de silicium et présente un diamètre de l'ordre de 3mm. Un tel clapet anti-retour 36, 37 à bille peut fonctionner à haute-fréquence, supérieure à 100 Hz -notamment à une fréquence comprise entre 100 Hz et 300 Hz, de préférence comprise entre 150 Hz et 250 Hz.

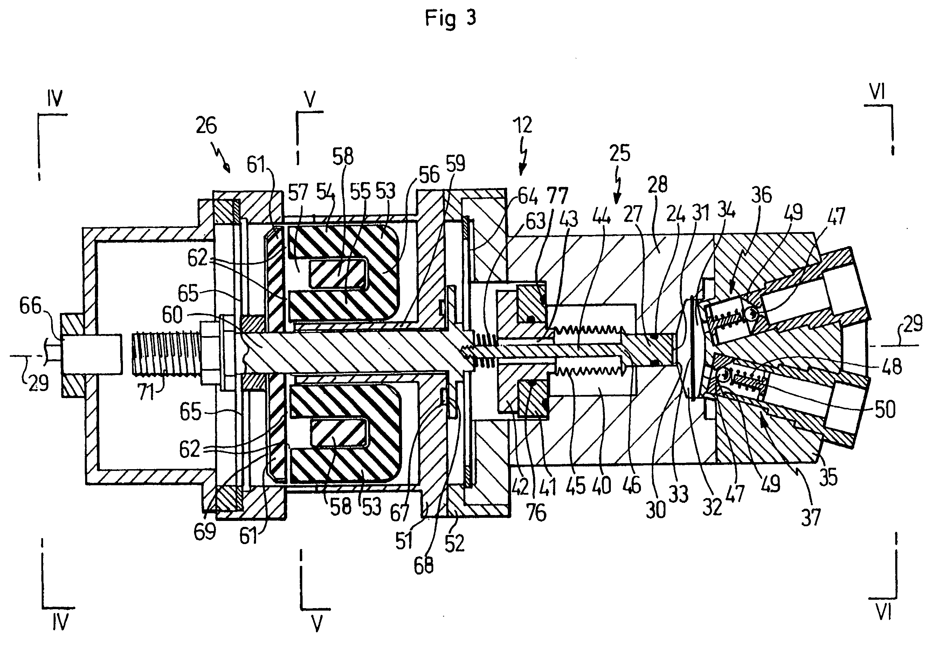

L'actionneur électromagnétique 26 comprend un corps d'actionneur 51 fixé en prolongement du bloc cylindre 28 par l'intermédiaire d'un flasque de liaison 52. La tête 35 du bloc cylindre 28, le bloc cylindre 28, le flasque de liaison 52, et le corps 51 de l'actionneur sont solidarisés les uns aux autres deux à deux par soudure et/ou par l'intermédiaire de boulons externes non représentés, de façon traditionnelle. Le corps d'actionneur 51 renferme une armature fixe 53 formée de quatre pièces fixes en matériau magnétique, chacune étant en forme générale de cavalier en U ou en C. Ces pièces fixes sont orientées globalement radialement et régulièrement réparties à 90° les unes des autres autour de l'axe de translation 29. Comme on le voit figure 3, chaque pièce fixe de l'armature fixe 53 présente deux ailes parallèles 54, 55 liées par une âme 56, et une ouverture 57 délimitée entre les extrémités libres des deux ailes 54, 55, cette ouverture 57 étant orientée à l'opposé du corps de pompe 25, les ailes 54, 55 étant parallèles à l'axe de translation 29. Toutes les ouvertures 57 et les quatre pièces fixes sont orientées selon un même plan radial. Les quatre armatures fixes 53 reçoivent entre leurs ailes 54, 55 un bobinage d'aimantation 58 centré sur l'axe de translation 29.

Chacune des pièces fixes 53 est formée d'un matériau magnétique feuilleté, par exemple formé d'un empilage de tôles magnétiques, - notamment des tôles au silicium- minces, isolées les unes des autres et collées les unes aux autres. Chaque feuille de ce matériau magnétique feuilleté est en forme de U ou de C, et les différentes feuilles en forme de U ou de C sont superposées de façon à former un empilage radial présentant la forme de cavalier. Un tel matériau magnétique feuilleté permet d'empêcher le développement des courants de Foucault lorsqu'un courant électrique circule dans le bobinage 58.

Les quatre pièces fixes 53 sont fixées rigidement au corps d'actionneur 51 autour d'un cylindre central 59 de ce corps d'actionneur 51. Ce cylindre central 59 est creux et traversé par un noyau axial 60 relié rigidement en prolongement de la tige 44 du piston 27. Ce noyau axial 60 est fixe à l'extrémité de la tige 44, par exemple par vissage, et débouche à l'opposé de la tige 44 axialement hors du cylindre central 59 et au-delà de l'armature fixe 53 de façon à pouvoir être fixé à une croix 61 comprenant quatre branches radiales à 90° s'étendant en regard des extrémités libres des ailes 54, 55 des pièces fixes 53. Cette croix 61 et le noyau 60 réalisent une armature mobile 60, 61 guidée en translation. Le noyau axial 60 et la croix 61 sont adaptés pour définir un entrefer 62 entre chacune des branches de la croix 61 et les extrémités libres des ailes 54, 55 de la pièce fixe 53 en regard. Chacune de ces branches de la croix 61 définit donc un circuit magnétique avec la pièce fixe 53 en regard, avec un entrefer dont la dimension varie au cours des mouvements de translation de l'armature mobile 60, 61 qui est reliée mécaniquement au piston 27 de façon à l'entraîner en translation dans le sens correspondant aux phases de refoulement du liquide lors de la fermeture de l'entrefer induite par la circulation d'un courant électrique dans le bobinage 58, et à être rappelé en translation avec le piston 27 dans le sens correspondant aux phases d'admission du liquide lors de l'ouverture de l'entrefer.

La croix 61 est réalisée en matériau magnétique doux massif -notamment en fer doux- et présente, à l'opposé de l'entrefer 62, des rainures longitudinales 69 ménagées dans chacune de ses branches afin de réduire les courants de Foucault. Ces rainures 69 sont creusées dans l'épaisseur des branches, par exemple par électroérosion.

En variante non représentée, l'armature fixe 53 peut être formée d'une pièce de matériau magnétique doux usinée dans la masse, par exemple par électroérosion, de façon à former deux cylindres concentriques reliés à une de leur extrémité par une couronne d'extrémité, recevant entre eux le bobinage d'aimantation, et présentant des fentes axiales dans leurs portions cylindriques et radiales dans la couronne d'extrémité afin de réaliser un feuilletage contre les courants de Foucault.

De même, la croix 61 de l'armature mobile 60, 61 peut être remplacée par un disque de matériau magnétique doux usiné dans la masse, par exemple par électroérosion, présentant des fentes radiales réalisant un feuilletage contre les courants de Foucault.

Quoiqu'il en soit, l'armature mobile 60, 61 comprend ainsi au moins une pièce (croix 61 ou disque) en matériau magnétique (doux) s'étendant radialement par rapport à son axe 29 de déplacement en translation par rapport à l'armature fixe 53 pour former l'entrefer 62 avec cette armature fixe 53.

Par ailleurs, l'électropompe 12 comprend des moyens 63 de rappel élastique du piston 27 et de l'armature mobile 60, 61 de l'actionneur électromagnétique 26, dans le sens correspondant aux phases d'admission du liquide adaptés pour être actifs et fournir un effort de rappel lorsque la pression d'admission devient inférieure à une valeur, dite pression seuil -notamment de l'ordre de 0,3MPa-. De préférence, les moyens 63 de rappel ne sont actifs qu'en fin de course du piston 27 lors des phases de refoulement.

On peut même prévoir que ces moyens 63 de rappel ne soient actifs que dans une portion extrême de la course du piston 27. Dans ce cas, les moyens électroniques de commande sont adaptés pour n'entraîner le piston 27 dans cette portion extrême que lorsque la pression d'admission devient inférieure à la pression seuil. Ainsi, les moyens 63 de rappel sont inactifs tant que la pression d'admission reste supérieure à la pression seuil. La pression seuil est supérieure à la pression minimale Pmin admissible dans le réservoir principal 2. Par exemple la pression seuil est de l'ordre de 0,3MPa alors que Pmin est de l'ordre de 0,1MPa. L'effort de rappel exercé par les moyens 63 de rappel est aussi, lors des phases d'admission, supérieur ou égal l'effort imparti par la pression seuil.

L'effort de rappel exercé par ces moyens 63 de rappel et par la pression d'admission est toujours inférieur à l'effort imparti par l'actionneur 26 lors des phases de refoulement. La différence entre ces efforts correspond à la pression de refoulement nominale à fournir.

Avantageusement, les moyens 63 de rappel élastique sont adaptés pour fournir un effort de rappel de l'ordre ou supérieur à celui correspondant à une pression d'admission de l'ordre de 0,3MPa.

Dans le mode de réalisation de la figure 3, on a représenté des moyens 63 de rappel élastique formés d'un ressort de compression 63 interposé entre la douille centrale 42 et l'extrémité du noyau axial 60, ce ressort 63 étant comprimé lors des phases de refoulement et se détendant lors des phases d'admission.

Par ailleurs, pour le guidage du noyau axial 60, des lames flexibles 64 radiales sont associées à l'extrémité du noyau axial 60 reliée à la tige 44, et des lames flexibles radiales 65 sont fixées à l'extrémité libre du noyau axial 60 reliée à la croix 61. Ces lames flexibles 64, 65 empêchent aussi la rotation relative de l'armature mobile 60, 61 par rapport au corps d'actionneur et par rapport à l'armature fixe 53.

Le piston 27 présente un diamètre de l'ordre de 5mm à 10mm -notamment de l'ordre de 6mm- pour une course axiale comprise entre 0,5mm et 5mm -notamment de l'ordre de 1mm-. L'entrefer 62 présente une dimension axiale légèrement supérieure à la course du piston 27.

La membrane flexible 33 et la chambre d'admission/refoulement 34 présentent un diamètre de l'ordre de 15mm à 25mm -notamment de l'ordre de 20mm-.

Un capteur 66 de la position absolue de l'armature mobile 60, 61 et du piston 27 est associé en regard de l'extrémité libre 71 du noyau axial 60. Ce capteur 66 de position absolue est fixé à une traverse 75 solidaire du corps d'actionneur 51. Par exemple, on peut utiliser un capteur 66 connu de type capacitif ou à courants de Foucault.

L'électropompe 12 selon l'invention comprend en outre des moyens 70 d'alimentation électrique et de commande de l'actionneur 26 aptes à en piloter le fonctionnement à une fréquence de fonctionnement supérieure à 100 Hz -notamment comprise entre 100 Hz et 300 Hz, de préférence entre 150 Hz et 250 Hz-. Ces moyens 70 électroniques comprennent un circuit électronique logique de commande formant l'automatisme de commande 18, un circuit électronique de puissance 72 piloté par l'automatisme de commande 18, et recevant l'énergie électrique d'une source de tension continue 73 par l'intermédiaire de moyens de filtrage 74. Le circuit électronique de puissance 72 est relié au bobinage 58 qu'il alimente en courant électrique. Le capteur de position 66 fournit un signal électrique à l'automatisme de commande 18 qui reçoit par ailleurs du capteur 17 un signal électrique représentatif de la pression Pa régnant dans le réservoir secondaire 13.

Les moyens 70 électroniques sont adaptés pour alimenter le bobinage 58 en courant électrique impulsionnel selon la fréquence de fonctionnement, ce courant étant apte à entraîner l'armature mobile 60, 61 active dans les phases de refoulement et à ne pas entraîner l'armature mobile 60, 61 qui est inactive dans les phases d'admission lors desquelles le piston 27 et l'armature mobile 60, 61 sont rappelés par la pression du liquide à l'admission, et/ou par les moyens 63 de rappel élastique.

Le profil du courant d'alimentation délivré par les moyens 70 électroniques est par ailleurs adapté pour éviter le contact de l'armature mobile 60, 61 avec l'armature fixe 53 en fin des phases de refoulement. De même, l'actionneur électromagnétique 26 comprend une butée de fin de course 67 amortie formée d'une garniture de caoutchouc fixée sur le corps d'actionneur 51 en regard d'un collet 68 formé par l'extrémité du noyau axial 60 reliée à la tige 44 du piston 27. Ainsi, la course de l'armature mobile 60, 61 et du piston 27 est limitée en fin de phase d'admission en tout état de cause par le contact entre ce collet 68 et la butée 67 solidaire du corps d'actionneur 51.

Néanmoins, les moyens 70 électroniques peuvent être adaptés pour délivrer un profil de courant d'alimentation adapté pour éviter le contact du collet 68 de l'armature mobile 60, 61 avec la butée 67 en fin de phase d'admission. Dès lors, les moyens 70 électroniques pilotent l'actionneur électromagnétique à réluctance variable 26 de façon que l'armature mobile 60, 61 se déplace en translations axiales alternatives sans venir au contact ni de l'armature fixe 53, ni du corps d'actionneur 51.

La figure 8 est un exemple de schéma du circuit électronique de puissance 72 formé d'une part en H de deux transistors et de diodes. Ce circuit reçoit une tension d'alimentation continue E et deux signaux de commande H et L délivrés par l'automatisme de commande 18. Ces signaux de commande H et L permettent de piloter le fonctionnement de deux interrupteurs T1 et T2 formés par exemple de transistors à effet de champ. Le bobinage 58 est relié entre la source du transistor T1 et le drain du transistor T2, et le circuit comprend deux diodes de roue libre D1, D2.

Lorsque les interrupteurs T1 et T2 sont fermés, un courant i s'installe dans le bobinage 58 et croît avec une pente E/ℓ, ℓ étant l'inductance du bobinage 58. Lorsque l'interrupteur T1 est ouvert et l'interrupteur T2 est fermé, le courant qui traverse le bobinage 58 se prolonge vers la diode de roue libre D1. Lorsque les deux interrupteurs T1, T2 sont ouverts, le courant qui traverse le bobinage 58 retourne vers l'alimentation et décroît avec une pente -E/ℓ jusqu'à s'annuler.

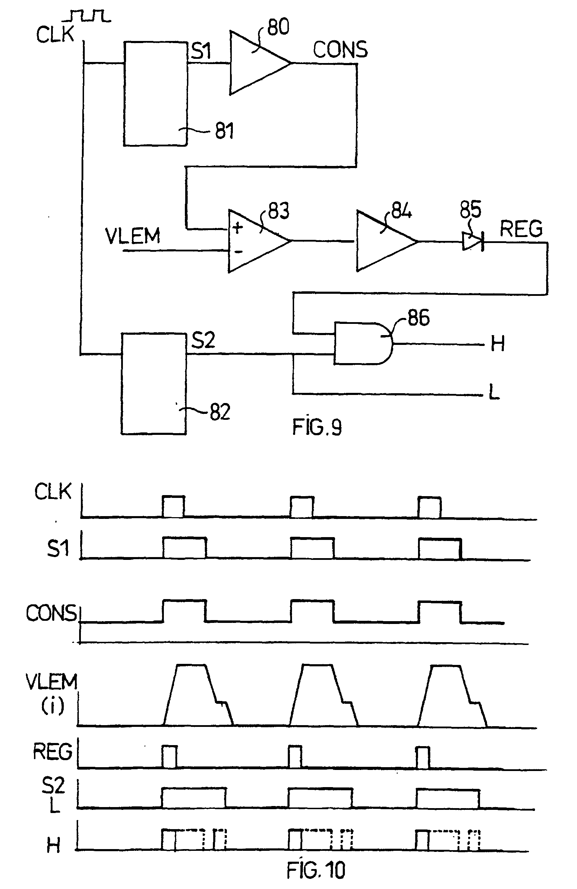

La figure 9 représente un schéma électronique de l'automatisme de commande 18.

La figure 10 représente un exemple de chronograrnmes des différents signaux délivrés par l'automatisme de commande 18 de la figure 9.

L'automatisme de commande 18 élabore et fournit les signaux de commande H et L pour les transistors du circuit de puissance 72. L'automatisme de commande 18 est adapté pour que le circuit de puissance 72 fournisse un profil de courant approprié au bobinage 58. Quant la valeur e de 62 est l'entrefer maximum, au démarrage d'une phase de refoulement, on a besoin d'un effort important sur le piston 27. Or cet effort est proportionnel à i²/e², i étant le courant dans le bobinage 58. Il faut donc fournir une forte valeur impulsionnelle du courant.

Le circuit de l'automatisme de commande 18 de la figure 9 reçoit un signal d'horloge CLK qui détermine la fréquence de fonctionnement et permet d'ajuster sa valeur, et un signal de tension VLEM issu d'un capteur de courant (par exemple de type à effet Hall) interposé dans le circuit, et qui est l'image du courant réel i circulant dans le bobinage 58. Il fournit en outre les signaux de commande H et L appliqués aux transistors T1 et T2 du circuit de puissance 72. Le signal d'horloge est envoyé sur les entrées de deux circuits monostables 81, 82 délivrant des signaux S1 et, respectivement, S2. le premier signal S1 permet de fixer la durée des créneaux d'un signal de consigne CONS obtenu en sortie d'un circuit d'amplification 80 du signal S1. Le deuxième signal S2 permet de fixer la durée de fonctionnement et forme le signal de commande L directement appliqué au transistor T2.

Le signal de consigne CONS détermine la durée de l'impulsion de courant dans le bobinage 58. Il est comparé au signal VLEM, image du courant réel dans le bobinage 58 par un étage de comparaison 83 à amplificateur opérationnel dont la sortie est amplifiée par un circuit d'amplification 84. Le signal de régulation REG obtenu en sortie est fourni par l'intermédiaire d'une diode 85 à l'entrée d'une porte ET 86 qui reçoit aussi le signal S2 en entrée, et dont la sortie délivre le signal de commande H fourni au transistor T1 du circuit de puissance. On réalise ainsi une régulation du courant i. Le signal de régulation REG est à un niveau haut lorsque CONS ≥ VLEM. Sur les chronogrammes, la partie du signal H représentée en pointillés est celle qui dépend du courant réel i (dont seul un exemple théorique est représenté) dans le bobinage 58. La régulation ainsi effectuée permet d'obtenir une valeur du courant i dans le bobinage 58 qui est au moins sensiblement constante pendant l'impulsion, en évitant qu'elle n'augmente trop.

Les moyens 74 de filtrage peuvent être réalisés par un circuit de filtrage passif de mode différentiel traditionnel comprenant une inductance série et une capacité parallèle. Une telle variante présente l'avantage de la simplicité, mais l'inconvénient d'un encombrement relativement important dans la mesure où la valeur des composants doit être relativement élevée.

Dans une autre variante de réalisation, les moyens de filtrage 74 peuvent être formés d'un circuit de filtrage actif adapté pour soustraire du courant délivré par la source de tension 73, un courant dont la valeur est égale à l'opposé des variations du courant consommé par le circuit de puissance 72, la valeur moyenne de ce courant consommé étant soustraite.

Les schémas des figures 9 et 10 correspondent à un automatisme de commande 18 ne comprenant pas de moyens d'asservissement. La force d'attraction entre l'armature mobile 60, 61 et l'armature fixe 53 augmente, en première approximation, proportionnellement à l'inverse du carré de l'entrefer. En fin de course, l'armature mobile 60, 61, arrive donc au voisinage de l'armature fixe 53 et est soumise à une force extrêmement grande, ce qui peut provoquer un choc. Pour éviter cet inconvénient, il convient de couper la consigne du courant d'alimentation du bobinage 58 suffisamment tôt, et ainsi d'annuler la force. Compte tenu du fait que ce courant ne peut s'annuler instantanément dans le bobinage 58 et de l'inertie de la partie mécanique, un asservissement à partir du capteur de position absolue 66 permet d'imposer à l'armature mobile 60, 61 une consigne de course, ou une valeur d'entrefer minimale à ne pas dépasser. Un tel asservissement peut être réalisé de façon traditionnelle en boucle fermée.

L'invention peut faire l'objet de nombreuses variantes par rapport aux modes de réalisation décrits et représentés sur les figures. En particulier, l'électropompe 12 peut comprendre plusieurs actionneurs électromagnétiques 26, par exemple montés tête-bêche de chaque côté d'un même corps de pompe 25 de façon à former une pompe double effet. De même, chaque corps de pompe peut comprendre plusieurs pistons parallèles afin d'augmenter la cylindrée.

## Revendications

1. Electropompe volumétrique à déplacement positif linéaire comprenant :
- au moins un piston (27) guidé en translation dans un bloc cylindre (28),
- une chambre d'admission/refoulement (34) de liquide dotée de clapets (36, 37) anti-retour d'admission/refoulement et adaptée pour recevoir des variations de pression induites par les déplacements du piston (27),
- des moyens (26, 70) moteurs électromagnétiques adaptés pour entraîner le piston (27) en translations alternatives dans le bloc cylindre (28), le déplacement du piston (27) dans un sens correspondant à des phases d'admission du liquide dans la chambre d'admission/refoulement (34), tandis que le déplacement du piston (27) dans l'autre sens correspond à des phases de refoulement de liquide hors de la chambre d'admission/refoulement (34),
**caractérisée en ce que** les moyens (26, 70) moteurs électromagnétiques comprennent :
- au moins un actionneur (26) électromagnétique à réluctance variable unidirectionnel à course linéaire, comprenant une armature mobile (60, 61) associée au piston (27) pour l'entraîner en translation dans le sens correspondant aux phases du refoulement du liquide,
- des moyens (70) électroniques d'alimentation électrique et de commande de l'actionneur (26) adaptés pour en piloter le fonctionnement à une fréquence de fonctionnement supérieure à 100 Hz.

2. Electropompe selon la revendication 1, **caractérisée en ce que** les moyens (70) électroniques d'alimentation électrique et de commande de l'actionneur (26) sont adaptés pour en piloter le fonctionnement à une fréquence de fonctionnement comprise entre 100 Hz et 300 Hz -notamment entre 150 Hz et 250 Hz-.

3. Electropompe selon l'une des revendications 1 ou 2, **caractérisée en ce que** l'actionneur (26) électromagnétique comprend une armature fixe (53) associée à au moins un bobinage (58) d'aimantation, et une armature mobile (60, 61) guidée en translations alternatives par rapport à l'armature fixe (53) avec laquelle elle définit un circuit magnétique avec un entrefer (62) dont la dimension varie au cours des mouvements de translation de l'armature mobile (60, 61), l'armature mobile (60, 61) étant reliée mécaniquement au piston (27) de façon à l'entraîner en translation dans le sens correspondant aux phases de refoulement du liquide lors de la fermeture de l'entrefer induite par la circulation d'un courant électrique dans le bobinage (58), et à être rappelée en translation avec le piston (27) dans le sens correspondant aux phases d'admission du liquide lors de l'ouverture de l'entrefer (62),
et **en ce que** lesdits moyens (70) électroniques sont adaptés pour alimenter le bobinage (58) en courant électrique impulsionnel selon la fréquence de fonctionnement apte à entraîner l'armature mobile (60, 61), qui est active, dans les phases de refoulement, et à ne pas entraîner l'armature mobile (60, 61) qui est inactive dans les phases d'admission lors desquelles le piston (27) et l'armature mobile (60, 61), sont rappelés par la pression du liquide à l'admission et/ou par des moyens (63) de rappel élastique.

4. Electropompe selon la revendication 3, **caractérisée en ce que** lesdits moyens (70) électroniques sont adaptés pour délivrer un profil de courant d'alimentation adapté pour empêcher le contact de l'armature mobile (60, 61) avec l'armature fixe (53) en fin des phases de refoulement.

5. Electropompe selon l'une des revendications 2 à 4, **caractérisée en ce que** l'actionneur électromagnétique (26) comporte une butée (67) amortie de fin de course limitant l'amplitude de déplacement de l'armature mobile (60, 61) en fin des phases d'admission, et **en ce que** lesdits moyens (70) électroniques sont adaptés pour délivrer un profil de courant d'alimentation adapté pour empêcher le contact de l'armature mobile (60, 61) avec la butée (67) en fin des phases d'admission.

6. Electropompe selon l'une des revendications 2 à 5, **caractérisée en ce qu'**elle comprend des moyens (63) de rappel élastique du piston (27) et de l'armature mobile (60, 61) de l'actionneur électromagnétique (26), dans le sens correspondant aux phases d'admission du liquide.

7. Electropompe selon la revendication 6, **caractérisée en ce que** les moyens (63) de rappel élastique comprennent un ressort (63) de compression adapté pour être comprimé au moins en fin de phase de refoulement et se détendre au moins en début de phase d'admission.

8. Electropompe selon l'une des revendications 6 ou 7, **caractérisée en ce que** les moyens (63) de rappel élastique sont adaptés pour être actifs et fournir un effort de rappel lorsque la pression d'admission devient inférieure à une valeur, dite pression seuil prédéterminée.

9. Electropompe selon l'une des revendications 2 à 8, **caractérisée en ce que** lesdits moyens (70) électroniques comportent au moins un capteur (66) de la position de l'armature mobile (60, 61) et/ou du piston (27), et des moyens d'asservissement en boucle fermée sur la position de l'armature mobile (60, 61) aptes à adapter le profil du courant électrique d'alimentation de l'actionneur (26) électromagnétique.

10. Electropompe selon l'une des revendications 1 à 9,
**caractérisée en ce qu'**elle comprend des moyens (24) d'étanchéité dynamique entre le piston (27) et le bloc cylindre (28), et une chambre de pompage (32) dans laquelle débouche une extrémité (31) active du piston (27), cette chambre de pompage (53) étant remplie d'un liquide neutre, et séparée de façon étanche de la chambre d'admission/refoulement (34) par une membrane flexible (33) apte à transmettre entre ces deux chambres (32, 34) les variations de pression à la fréquence de fonctionnement, de sorte que le liquide pompé ne vient pas au contact des moyens (24) d'étanchéité dynamique interposés entre le piston (27) et le bloc cylindre (28).

11. Electropompe selon la revendication 10, **caractérisée en ce que** la membrane (33) est métallique.

12. Electropompe selon l'une des revendications 1 à 11, **caractérisée en ce que** chacun des clapets (36, 37) anti-retour comprend une bille (47) rappelée par un ressort (48) contre un siège de clapet (49), et une butée (50) axiale de limitation de levée de bille de façon à empêcher le déplacement axial de la bille (47) au-delà de sa position dans laquelle elle ne freine plus l'écoulement traversant le siège du clapet (49).

13. Electropompe selon l'une des revendications 1 à 12, **caractérisée en ce que** chacun des clapets (36, 37) anti-retour comprend une bille (47) en nitrure de silicium dont le diamètre est de l'ordre de 3mm.

14. Electropompe selon l'une des revendications 1 à 13, **caractérisée en ce que** le piston (27) présente un diamètre de 5mm à 10mm -notamment de l'ordre de 6mm- pour une course axiale comprise entre 0,5 mm et 5mm -notamment de l'ordre de 1mm-.

## Patentansprüche

1. Elektrische Linearverdrängerpumpe, die Folgendes umfasst:
- wenigstens einen Kolben (27), der translational in einem Zylinderblock (28) geführt wird,
- eine Flüssigkeitsansaug-/-förderkammer (34), die mit Ansaug-/Förderrückschlagventilen (36, 37) ausgestattet und so gestaltet ist, dass sie durch die Bewegungen des Kolbens (27) erzeugte Druckvariationen aufnimmt,
- elektromagnetische Antriebsmittel (26, 70) mit der Aufgabe, den Kolben (27) in wechselweise Translationsbewegungen im Zylinderblock (28) zu versetzen, wobei die Bewegung des Kolbens (27) in der einen Richtung den Ansaugphasen der Flüssigkeit in die Ansaug-/Förderkammer (34) entspricht, während die Bewegung des Kolbens (27) in der anderen Richtung den Förderphasen der Flüssigkeit aus der Ansaug-/Förderkammer (34) entspricht,
**dadurch gekennzeichnet, dass** die elektromagnetischen Antriebsmittel (26, 70) Folgendes umfassen:
- wenigstens ein elektromagnetisches, variables, unidirektionales Linearreluktanz-Stellglied (26), das einen beweglichen Anker (60, 61) in Verbindung mit dem Kolben (27) umfasst, um diesen translational in der Richtung zu bewegen, die den Flüssigkeitsförderphasen entspricht,
- elektronische Stromversorgungs- und Steuermittel (70) für das Stellglied (26), um den Betrieb mit einer Betriebsfrequenz von mehr als 100 Hz zu steuern.

2. Elektropumpe nach Anspruch 1, **dadurch gekennzeichnet, dass** die elektronischen Stromversorgungs- und Steuermittel (70) des Stellglieds (26) die Aufgabe haben, den Betrieb mit einer Betriebsfrequenz zwischen 100 Hz und 300 Hz, insbesondere zwischen 150 Hz und 250 Hz, zu steuern.

3. Elektropumpe nach Anspruch 1 oder 2, **dadurch gekennzeichnet, dass** das elektromagnetische Stellglied (26) einen festen Anker (53) in Verbindung mit wenigstens einer Magnetspule (58) und einen beweglichen Anker (60, 61) umfasst, der wechselweise translational in Bezug auf den festen Anker (53) geführt wird, mit dem er einen Magnetkreis mit einem Spalt (62) definiert, dessen Größe im Verlaufe der Translationsbewegungen des beweglichen Ankers (60, 61) variiert, wobei der bewegliche Anker (60, 61) mechanisch mit dem Kolben (27) so verbunden ist, dass er diesen translational in der Richtung bewegt, die den Flüssigkeitsförderphasen beim Schließen des Spalts entspricht, der durch den Fluss eines elektrischen Stroms in der Spule (58) bewirkt wird, und translational mit dem Kolben (27) in der Richtung zurückgestellt wird, die den Flüssigkeitsansaugphasen beim Öffnen des Spalts (62) entspricht,
und **dadurch**, dass die genannten elektronischen Mittel (70) so gestaltet sind, dass sie die Spule (58) mit elektrischen Stromimpulsen mit der Betriebsfrequenz speisen, die geeignet ist, um den beweglichen Anker (60, 61), der in den Förderphasen aktiv ist, in Bewegung zu versetzen und um den beweglichen Anker (60, 61) nicht in Bewegung zu versetzen, der in den Ansaugphasen inaktiv ist, in denen der Kolben (27) und der bewegliche Anker (60, 61) durch den Druck der Ansaugflüssigkeit und/oder durch die elastischen Rückstellmittel (63) zurückgestellt werden.

4. Elektropumpe nach Anspruch 3, **dadurch gekennzeichnet, dass** die genannten elektronischen Mittel (70) so gestaltet sind, dass sie ein Speisestromprofil erzeugen, das einen Kontakt des beweglichen Ankers (60, 61) mit dem festen Anker (53) am Ende der Förderphasen verhindert.

5. Elektropumpe nach einem der Ansprüche 2 bis 4, **dadurch gekennzeichnet, dass** das elektromagnetische Stellglied (26) einen Wegendedämpfungsanschlag (67) umfasst, der die Bewegungsamplitude des beweglichen Ankers (60, 61) am Ende von Ansaugphasen begrenzt, und **dadurch**, dass die genannten elektronischen Mittel (70) so gestaltet sind, dass sie ein Speisestromprofil erzeugen, das die Aufgabe hat, einen Kontakt des beweglichen Ankers (60, 61) mit dem Anschlag (67) am Ende der Ansaugphasen zu verhindern.

6. Elektropumpe nach einem der Ansprüche 2 bis 5, **dadurch gekennzeichnet, dass** sie elastische Rückstellmittel (63) des Kolbens (27) und des beweglichen Ankers (60, 61) des elektromagnetischen Stellglieds (26) in der Richtung umfasst, die den Flüssigkeitsansaugphasen entspricht.

7. Elektropumpe nach Anspruch 6, **dadurch gekennzeichnet, dass** die elastischen Rückstellmittel eine Druckfeder (63) umfassen, die so gestaltet ist, dass sie wenigstens am Ende der Förderphase zusammengedrückt und wenigstens am Anfang der Ansaugphase entspannt wird.

8. Elektropumpe nach Anspruch 6 oder 7, **dadurch gekennzeichnet, dass** die elastischen Rückstellmittel (63) so gestaltet sind, dass sie aktiv sind und eine Rückstellkraft ausüben, wenn der Ansaugdruck kleiner als ein Wert, vorbestimmter Druckschwellenwert genannt, wird.

9. Elektropumpe nach einem der Ansprüche 2 bis 8, **dadurch gekennzeichnet, dass** die elektronischen Mittel (70) wenigstens einen Sensor (66) zum Erfassen der Position des beweglichen Ankers (60, 61) und/oder des Kolbens (27) umfassen, und Regelungsmittel in der Position des beweglichen Ankers (60, 61), um das Speisestromprofil des elektromagnetischen Stellglieds (26) anzupassen.

10. Elektropumpe nach einem der Ansprüche 1 bis 9, **dadurch gekennzeichnet, dass** sie dynamische Dichtungsmittel (24) zwischen dem Kolben (27) und dem Zylinderblock (28) sowie eine Pumpkammer (32) umfasst, in die ein aktives Ende (31) des Kolbens (27) mündet, wobei diese Pumpkammer (53) mit einer neutralen Flüssigkeit gefüllt ist, und von einer flexiblen Membran (33), die zwischen den beiden Kammern (32, 34) die Druckvariationen mit Betriebsfrequenz übertragen kann, auf dichte Weise von der Ansaug-/Förderkammer (34) getrennt ist, so dass die gepumpte Flüssigkeit nicht mit dynamischen Dichtungsmitteln (24) in Kontakt kommt, die sich zwischen dem Kolben (27) und dem Zylinderblock (28) befinden.

11. Elektropumpe nach Anspruch 10, **dadurch gekennzeichnet, dass** die Membran (33) metallisch ist.

12. Elektropumpe nach einem der Ansprüche 1 bis 11, **dadurch gekennzeichnet, dass** jedes der Rückschlagventile (36, 37) eine Kugel (47) umfasst, die von einer Feder (48) gegen einen Ventilsitz (49) zurückgedrückt wird, und einen axialen Anschlag (50) zum Begrenzen des Hubs der Kugel, um eine axiale Verschiebung der Kugel (47) über die Position hinaus zu verhindern, in der sie den Fluss durch den Ventilsitz (49) nicht mehr bremst.

13. Elektropumpe nach einem der Ansprüche 1 bis 12, **dadurch gekennzeichnet, dass** jedes der Rückschlagventile (36, 37) eine Kugel (47) aus Siliciumnitrid umfasst, deren Durchmesser etwa 3 mm beträgt.

14. Elektropumpe nach einem der Ansprüche 1 bis 13, **dadurch gekennzeichnet, dass** der Kolben (27) einen Durchmesser von 5 mm bis 10 mm, insbesondere von etwa 6 mm, für einen axialen Weg zwischen 0,5 mm und 5 mm, insbesondere von etwa 1 mm, hat.

## Claims

1. Volumetric electric pump with positive linear displacement, comprising:
- at least one piston (27) which is guided in translation in a cylinder unit (28);
- a chamber (34) for intake/delivery of liquid provided with intake/delivery non-return shutters (36, 37) and designed to admit pressure variations induced by the displacements of the piston (27);
- electromagnetic drive means (26, 70) which are designed to drive the piston (27) in alternating translations in the cylinder unit (28), the displacement of the piston (27) in one direction corresponding to phases of intake of the liquid into the intake/delivery chamber (34), whereas the displacement of the piston (27) in the other direction corresponds to phases of delivery of liquid outside the intake/delivery chamber (34);
**characterised in that** the electromagnetic drive means (26, 70) comprise:
- at least one electromagnetic actuator (26) with one-way variable reluctance with a linear path, comprising a mobile armature (60, 61) which is associated with the piston (27) in order to drive the latter in translation in the direction corresponding to the phases of delivery of the liquid; and
- electronic means (70) for electrical supply and control of the actuator (26) which are designed to pilot the operation of the latter at an operating frequency which is greater than 100 Hz.

2. Electric pump according to claim 1, **characterised in that** the electronic means (70) for electrical supply and control of the actuator (26) are designed to pilot the operation of the latter at an operating frequency of between 100 Hz and 300 Hz, and in particular of between 150 Hz and 250 Hz.

3. Electric pump according to claim 1 or claim 2,
**characterised in that** the electromagnetic actuator (26) comprises a fixed armature (53) which is associated with at least one magnetisation winding (58), and a mobile armature (60, 61) which is guided in alternating translations relative to the fixed armature (53) with which it defines a magnetic circuit with an air gap (62), the dimension of which varies during movements of translation of the mobile armature (60, 61), the mobile armature (60, 61) being connected mechanically to the piston (27) such as to drive the latter in translation in the direction corresponding to the phases of delivery of the liquid during the closure of the air gap induced by the circulation of an electric current in the winding (58), and to be returned in translation together with the piston (27) in the direction corresponding to the phases of intake of the liquid during opening of the air gap (62),
and **in that** the said electronic means (70) are designed to supply the winding (58) with an electric pulse current which, according to the operating frequency, can drive the mobile armature (60, 61) which is active, in the delivery phases, and cannot drive the mobile armature (60, 61) which is inactive, in the intake phases during which the piston (27) and the mobile armature (60, 61) are returned by the pressure of the liquid at admission and/or by means (63) for resilient return.

4. Electric pump according to claim 3, **characterised in that** the said electronic means (70) are designed to provide a supply current profile which is designed to prevent the contact of the mobile armature (60, 61) with the fixed armature (53) at the end of the delivery phases.

5. Electric pump according to any one of claims 2 to 4, **characterised in that** the electromagnetic actuator (26) comprises a damped end stop (67) which limits the extent of displacement of the mobile armature (60, 61) at the end of the intake phases, and the said electronic means (70) are designed to provide a supply current profile which is designed to prevent contact of the mobile armature (60, 61) with the stop (67) at the end of the intake phases.

6. Electric pump according to any one of claims 2 to 5, **characterised in that** it comprises means (63) for resilient return of the piston (27) and of the mobile armature (60, 61) of the electromagnetic actuator (26), in the direction corresponding to the intake phases of the liquid.

7. Electric pump according to claim 6, **characterised in that** the means (63) for resilient return comprise a compression spring (63) which is designed to be compressed at least at the end of the delivery phase and to relax at least at the start of the intake phase.

8. Electric pump according to claim 6 or claim 7, **characterised in that** the means (63) for resilient return are designed to be active and to provide a return force when the intake pressure becomes lower than a value, known as the predetermined threshold pressure.

9. Electric pump according to any one of claims 2 to 8, **characterised in that** the said electronic means (70) comprise at least one sensor (66) for the position of the mobile armature (60, 61) and/or of the piston (27), and means for automatic control in a closed loop of the position of the mobile armature (60, 61) which are designed to adapt the profile of the electric supply current of the electromagnetic actuator (26).

10. Electric pump according to any one of claims 1 to 9, **characterised in that** it comprises means (24) for dynamic sealing between the piston (27) and the cylinder unit (28), and a pumping chamber (32) into which projects an active end (31) of the piston (27), this pumping chamber (53) being filled with a neutral liquid, and being separated in a sealed manner from the intake/delivery chamber (34) by a flexible membrane (33) which can transmit between these two chambers (32, 34) the variations of pressure at the operating frequency, such that the liquid pumped does not come into contact with the dynamic means (24) for sealing interposed between the piston (27) and the cylinder unit (28).

11. Electric pump according to claim 10, **characterised in that** the membrane (33) is made of metal.

12. Electric pump according to any one of claims 1 to 11, **characterised in that** each of the non-return shutters (36, 37) comprises a ball (47) which is returned by a spring (48) against a shutter seat (49), and an axial stop (50) to limit raising of the ball such as to prevent axial displacement of the ball (47) beyond its position in which it no longer brakes the flow which passes through the seat of the shutter (49).

13. Electric pump according to any one of claims 1 to 12, **characterised in that** each of the non-return shutters (36, 37) comprises a silicon nitride ball (47), the diameter of which is approximately 3 mm.

14. Electric pump according to any one of claims 1 to 13, **characterised in that** the piston (27) has a diameter of 5 mm to 10 mm, and in particular approximately 6 mm, for axial travel of between 0.5 mm and 5 mm, and in particular approximately 1 mm.
